# EUROPEAN PATENT SPECIFICATION

(11) **EP 1 306 916 B1**
(45) Date of publication and mention of the grant of the patent: **28.09.2016**
(21) Application number: 01125123.8
(22) Date of filing: 23.10.2001
(51) Int. Cl.: H01M 8/04

(54) **Fuel cell system and method for operating the same**
Brennstoffzellensystem und Betriebsverfahren dazu
Système de piles à combustible et procédé opératoire

(43) Date of publication of application: 02.05.2003
(73) Proprietor: NuCellSys GmbH, 73230 Kirchheim/Teck-Nabern (DE)
(72) Inventor: Blaszczyk, Janusz, Richmond, BC V7C 5R8 (CA); Fleck, Wolfram, Coquitlam, BC, V3J 5V5 (CA); Mulvenna, Alan, North Vancouver, BC V7N 2S2 (CA); Campbell, Perry, V5G 3A7 Burnaby, BC (CA); Schmidt, Gerhard, BC, V4M 2X9 (CA)
(74) Representative: JENSEN & SON

(56) References cited:
- WO-A-01/24296
- DE-A- 10 018 139
- DE-A- 19 929 732
- US-A- 6 068 941

## Description

The invention relates to a fuel cell system and a method for operating the same in accordance with the preamble of the independent claims.

During operation of a fuel cell system water and heat is produced by reacting hydrogen and oxygen in the fuel cell stack. In fuel cell systems equipped with polymer membrane fuel cells (PEM fuel cells) the water management is a crucial factor in fuel cell operation as the membrane has to be kept wet and water may required for catalytic reactions if a gas production system is present which provides hydrogen for the fuel cell anode being extracted from a fuel in the gas production system.

If the fuel cell system is being set into operation while the ambient temperature is below the freezing point of water, problems will arise due to a possible freezing of product water in the fuel cell stack.

In US 6,068,941 A1 a fuel cell system is disclosed which deals with the start-up problem by integrating a heat exchanger bypass loop into the fuel cell system for bypassing coolant water around said heat exchanger during start-up of the fuel cell system. Methanol or ethanol is fed into the coolant passages during shut down so as to prevent water trapped therein from freezing in subfreezing environments. Upon start-up, a controlled amount of air is fed through the cathode reactant flow field so that alcohol diffusing to the cathode catalyst is oxidized, producing heat which will raise the temperature of the fuel cell above freezing. Nevertheless, possible freezing of product water during start up at very low temperatures has still to be considered.

The invention is based on the object of specifying a fuel cell system with improved cold start characteristics where the fuel cell can be safely set into operation even at low temperatures below the freezing temperature of water produced by the fuel cell.

This object is achieved in the case of a fuel cell system having the features of Claim 1 and in the case of a method having the features of Claim 5.

According to the invention the forming of ice in the fuel cell during cold start can be prevented, as well as freezing of water collecting units in the cathode exhaust line. By making use of the heat of compression the fuel cell coolant can be heated up very quickly and normal operation conditions can be established.

Further advantages and refinements of the invention emerge from the rest of the claims and the description.

The invention is explained in more detail below with reference to a drawing with a single figure, in which:
- Figure 1: shows a schematic sketch of a preferred embodiment of a fuel cell system according to the invention and
- Figure 2: shows a schematic sketch of another preferred embodiment of a preferred fuel cell system according to the invention.

The invention can be advantageously used in vehicles where a fuel cell system is used to supply electric energy for traction and/or low power requirements. The invention is highly favourable for hydrogen fuel cell systems. It can also be applied, however, to fuel cell systems with a gas production system where hydrogen is produced from a fuel, e.g. by a reforming process.

In fuel cell systems equipped with polymer membrane fuel cells (PEM fuel cells) product water is formed during operation of the fuel cell and usually collected in a condenser or a gas/liquid separator in the fuel cell exhaust line. The water is recycled to the fuel cell system thus being available for humidification of the fuel cell process gases and for water-steam reforming reactions in a gas production system in reformer type fuel cell systems.

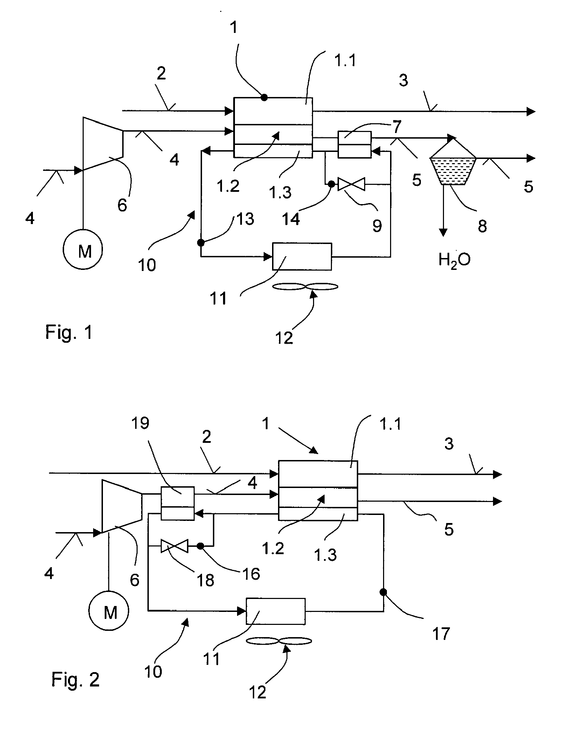

Fig. 1 shows a schematic drawing of a preferred embodiment of a fuel cell system according to the invention. The fuel cell system comprises a fuel cell 1, preferably a fuel cell stack, where a multiplicity of single fuel cells are stacked together to be capable of producing a desired amount of electric power. The fuel cell 1 exhibits an anode 1.1 with an anode feed line 2 for feeding hydrogen to the fuel cell anode 1.1 and an anode exhaust line 3 to remove the exhaust from the anode 1.1. The fuel feed line 2, the anode 1.1 and the anode exhaust line 3 are members of a so called fuel processing portion of the fuel cell 1 which may comprise additional components such as pumps, vents, water collectors and the like for conducting and treating the fuel before, during and after entering the fuel cell 1.

The fuel cell 1 further comprises a cathode 1.2 with a cathode feed line 4 for feeding oxygen to the fuel cell cathode 1.2 and a cathode exhaust line 5 to remove the exhaust from the cathode 1.2. The anode exhaust mainly carries away surplus hydrogen and water from the fuel cell 1. The oxidant feed line 4, the cathode 1.2 and the cathode exhaust line 5 are members of a so called oxidant processing portion of the fuel cell 1 which may comprise additional components such as pumps, vents, water collectors and the like for conducting and treating the oxidant before, during and after entering the fuel cell 1.

The fuel in the anode 1.1 and the oxidant in the cathode 1.2 react in the fuel cell 1 generating water and electric power in said fuel cell as is well known to those skilled in the art of fuel cells.

The oxygen or so called oxidant for the fuel cell cathode 1.2 is fed to a compression unit 6 through cathode feed line 4 and compressed by said compression unit 6 to an appropriate operating pressure. The compression unit 6 can be a motor driven compressor or a pump or the like. Preferably, air is used for supplying the cathode 1.2 with oxygen.

The fuel cell system can be run on hydrogen as fuel or comprise a gas production system, where hydrogen is formed by reacting a fuel in the gas production system.

Suitable fuels are carbon hydrates or hydrogen compounds such as alcohol, ether, ester and other suitable compounds comprising hydrogen as one component.

A first heat exchanger 7 is arranged in the cathode exhaust line 5. The cathode exhaust is being cooled down by this heat exchanger making use of a fuel cell cooling circuit 10. Downstream to this first heat exchanger 7 a water collecting unit 8 such as a condenser and/or a gas/liquid separator is arranged in the cathode exhaust line 5. Water is extracted from the cathode exhaust and collected in said water collecting unit 8. The cathode exhaust usually carries away most of the product water formed during fuel cell operation. As known in the art, water extracted from the fuel cell exhaust can be recycled into the fuel cell system for humidification purposes of process gases and/or chemical reactions in the gas production system if necessary.

Further, the first heat exchanger 7 and/or the water collecting unit 8 can also be installed additionally in the anode exhaust line 3.

Cooling of the fuel cell 1 is performed by employing a cooling circuit 10 which conducts the heat produced by the fuel cell 1 to a radiator 11. The radiator 11 can be cooled by a fan 12. A coolant is circulating in the cooling circuit 10 through line 13, the radiator 11 and the cooling compartment 1.3 of the fuel cell stack 1. Details of the cooling circuit such as pumps or control units are not shown but well known to those skilled in the art.

Having the first heat exchanger 7 and the water collecting unit 8 connected in series to each other the cooling capacity of the fuel cell cooling circuit 10 is used the cool down the fuel cell exhaust before it enters the water collecting unit 8. Therefore, less power is needed for the water collecting unit 8 for extracting water from the fuel cell exhaust.

During cold start the first heat exchanger 7 can be by-passed via a by-pass line 14 which can be opened and closed by a first valve 9. The valve 9 can be activated according to operation conditions of the fuel cell system. If in a start-up procedure of the fuel cell system the ambient temperature is too low so that freezing of the product water and/or the water in the water collecting unit 8 might occur, the first valve 9 is opened and the coolant of the fuel cell cooling circuit starts to flow through the bypass line 14 instead of the first heat exchanger 7. Therefore, the fuel cell exhaust enters the water collecting unit 8 at a higher temperature level than in a condition where the cathode exhaust is cooled by the fuel cell cooling circuit 10 pre to entering the water collecting unit 8.

During cold weather starting, i.e. below freezing ambient conditions, the coolant entering the first heat exchanger 7 will be at the same temperature as the ambient. This would force the product water to freeze as it passes through the first heat exchanger 7. The first heat exchanger 7 would quickly become plugged with ice, and the fuel cell system would have to be shut down due to air starvation.

By shutting off the coolant flow to and by-passing the first heat exchanger 7 until the coolant is above 0°C or another desired temperature of the coolant, the icing problem can be avoided. This is accomplished with the first valve 9 giving way to or shutting off the by-pass line 14. The first valve 9 can be control actuated by an appropriate control unit responsive to control signals of a control unit in the fuel cell system or can be a passive thermostatic valve responsive to a temperature, e.g. the coolant temperature.

If required there can be a "trickle" by-pass to ensure that a sufficient amount of water is condensed from the cathode air or oxygen stream to meet the humidification requirements of the fuel cell system. Once the coolant is above the critical temperature above which no freezing of product water will occur the flow rate can be restored to the first heat exchanger 7 as in normal operation.

In fig. 2 another preferred embodiment of the invention is described. Same elements as in fig. 1 are referred to by the same reference numbers. In this embodiment a second heat exchanger 19, a so called charge air (or oxygen) cooler, is installed between the compression unit 6 in the oxygen line 4 and the fuel cell cathode 1.2. In normal operation conditions the compressed oxidant has to be cooled down before entering the cathode 1.2.

Ice could be formed in the fuel cell 1 during cold start operation below freezing ambient conditions if the air or oxygen temperature entering the fuel cell cathode 1.2 is too low. This ice would plug the fuel cell 1, preventing its operation and forcing a shut down of the system. This could happen during a cold start below 0°C when the coolant used in the second heat exchanger 19 is the same temperature as the ambient. This cold coolant would pull the air or oxygen temperature down to near ambient temperatures before it enters the fuel cell cathode 1.2.

According to the invention the second heat exchanger 19 can be by-passed by a by-pass line 16 which can be opened or closed by a second valve 18. The valve 18 can be control actuated by an appropriate control unit or can be a passive thermostatic valve as already described for the first valve 9 in fig. 1.

The second heat exchanger 19 cools the air or oxygen coming from the compression unit 6, preferably a motor driven compressor, using the coolant of the fuel cell cooling circuit 10. By by-passing the second heat exchanger 19 during cold start at low ambient temperatures below 0°C or a temperature below which freezing of product water might occur the heat of compression in compression unit 6 can be used for warming up the air or oxygen being fed to the fuel cell cathode 1.2 above freezing temperatures of the product water. In this mode, by warming up the oxidant entering the cathode 1.2, the coolant in the fuel cell cooling circuit 10 is also warmed up and helps to warm the fuel cell. Once the coolant is above 0°C or another desired temperature value, the coolant flow can be restored in conduit line 17 of said fuel cell cooling circuit 10 to the second heat exchanger 19 as in normal operation. Another possibility is to shut off the coolant flow during cold start of the system.

The embodiments of fig. 1 and 2 can be employed individually or can also be combined with each other so that at least the first heat exchanger 7 is arranged in the cathode exhaust line 5 and the second heat exchanger 19 is arranged in the oxidant feed line 4 favourably both being by-passed by the coolant at low temperatures.

By operating the fuel cell system such that the oxidant being conducted and processed in said oxidant processing portion 1.2, 4, 5 of said fuel cell system during normal operation is cooled by the coolant of the fuel cell circuit 10 and that during start-up of the fuel cell system the flow of the coolant is switched to one or more by-pass circuits 14, 16, thus inhibiting cooling of the oxidant and/or fuel cell exhaust, the performance or the fuel cell system during start-up is favourably increased.

According to the invention the forming of ice in the fuel cell during cold start can be prevented so that a shut down of the fuel cell system due to plugging of the fuel cell from ice formation can be avoided.

## Claims

1. A fuel cell system comprising a fuel cell (1) with a fuel processing portion (1.1, 2, 3) which fuel processing portion (1.1, 2, 3) comprises an anode (1.1) with a fuel feed line (2) to feed fuel to the anode (1.1) and an anode exhaust line (3) for removing anode exhaust from the anode (1.1) and an oxidant processing portion (1.2, 4, 5) which oxidant processing portion (1.2, 4, 5) comprises a cathode (1.2) with an oxygen feed line (4) to feed oxygen to the cathode (1.2) and a cathode exhaust line (5) to remove cathode exhaust from the cathode (1.2), a water collecting unit (9) for extracting water from the cathode exhaust, **characterized in that**
- at least one heat exchanger (7, 19) is arranged in the oxidant processing portion (1.2, 4, 5),
- that one portion of said heat exchanger (7, 19) is in thermal contact with a coolant of a fuel cell cooling circuit (10) of said fuel cell (1) and another part of said heat exchanger (7, 19) is in thermal contact with the oxidant or a fuel cell exhaust for cooling the oxidant and/or the fuel cell exhaust,
- whereby below the freezing point of product water generated in said fuel cell (1) a by-pass circuit (14, 16) is employed to shut off a coolant flow to said heat exchanger (7, 19).

2. A fuel cell system according to Claim 1, **characterized in that** said heat exchanger (7) and said by-pass circuit (14) is employed in the cathode exhaust line (5).

3. A fuel cell system according to Claim 1, **characterized in that** said heat exchanger (19) and said by-pass circuit (14) is employed in the cathode feed line (4).

4. A fuel cell system according to Claim 1, **characterized in that** a first heat exchanger (7) and a first by-pass circuit (14) is employed in the cathode exhaust line (5) and a second heat exchanger (19) and a second by-pass circuit (14) is employed in the cathode feed line (4).

5. A fuel cell system according to Claim 1, **characterized in that** a heat exchanger (7) and a by-pass circuit (14) is additionally employed in the anode exhaust line (3).

6. A fuel cell system according to Claim 1, **characterized in that** a valve (9, 18) is employed in said by-pass circuit (14, 16).

7. A fuel cell system according to Claim 6, **characterized in that** said valve (9, 18) is a passive thermostatic valve.

8. A fuel cell system according to Claim 6, **characterized in that** said valve (9, 18) is a control activated valve responsive to a control unit of said fuel cell system.

9. A method for operating a fuel cell system where a fuel is fed to an anode (1.1) of a fuel cell (1) and an oxidant is fed to a cathode (1.2) of said fuel cell (1), where the oxidant is conducted and processed in an oxidant processing portion (1.2, 4, 5) of said fuel cell system,
**characterized in that** during normal operation of said fuel cell system said oxidant and/or a fuel cell exhaust is cooled by a coolant of a fuel cell circuit (10) and that during start-up of the fuel cell system the flow of the coolant is switched to a by-pass circuit (14, 16) thus inhibiting cooling of the oxidant and/or fuel cell exhaust.

10. A method according to Claim 9,
**characterized in that** the switching of the coolant flow is performed dependent on operation conditions of the fuel cell system.

11. A method according to Claim 9,
**characterized in that** the switching of the coolant flow is performed by a passive thermostatic valve (9, 18) responsive to the temperature of the coolant.

12. A method according to Claim 9,
**characterized in that** the switching of the coolant flow is performed by a control activated valve (9, 18) responsive to a control signal of a control unit employed in said fuel cell system.

## Patentansprüche

1. Brennstoffzellensystem umfassend eine Brennstoffzelle (1) mit einem brennstoffverarbeitenden Teil (1.1, 2, 3), wobei der brennstoffverarbeitende Teil (1.1, 2, 3) eine Anode (1.1) mit einer Brennstoffzufuhrleitung (2) zur Zufuhr von Brennstoff zur Anode (1.1) und eine Anodenabgasleitung (3) zur Entfernung von Anodenabgas von der Anode (1.1) umfasst, und umfassend einen oxidansverarbeitenden Teil (1.2, 4, 5), wobei der oxidansverarbeitende Teil (1.2, 4, 5) eine Kathode (1.2) mit einer Sauerstoffzufuhrleitung (4) zur Zufuhr von Sauerstoff zur Kathode (1.2) und eine Kathodenabgasleitung (5) zur Entfernung von Kathodenabgas von der Kathode (1.2) umfasst, und eine Wassersammeleinheit (9) zur Extraktion von Wasser aus dem Kathodenabgas, **dadurch gekennzeichnet, dass**
- mindestens ein Wärmetauscher (7,19) im oxidansverarbeitenden Teil (1.2, 4, 5) angeordnet ist, und
- dass ein Teil des Wärmetauschers (7, 19) in thermischem Kontakt mit einem Kühlmittel eines Brennstoffzellen-Kühlkreises (10) der Brennstoffzelle (1) und ein anderer Teil des Wärmetauschers (7, 19) in thermischem Kontakt mit dem Oxidans oder einem Brennstoffzellenabgas steht, um das Oxidans und/oder das Brennstoffzellenabgas zu kühlen,
- wobei unterhalb des Gefrierpunktes des in der Brennstoffzelle (10) erzeugten Produktwassers ein Umgehungskreislauf (14, 16) eingesetzt wird, um einen Kühlmittelfluss zum Wärmetauscher (7, 19) zu unterbinden.

2. Brennstoffzellensystem nach Anspruch 1,
**dadurch gekennzeichnet, dass** der Wärmetauscher (7) und der Umgehungskreislauf (14) in der Kathodenabgasleitung (5) eingesetzt werden.

3. Brennstoffzellensystem nach Anspruch 1,
**dadurch gekennzeichnet, dass** der Wärmetauscher (19) und der Umgehungskreislauf (14) in der Kathodenzufuhrleitung (4) eingesetzt werden.

4. Brennstoffzellensystem nach Anspruch 1,
**dadurch gekennzeichnet, dass** ein erster Wärmetauscher (7) und ein erster Umgehungskreislauf (14) in der Kathodenabgasleitung (5) und ein zweiter Wärmetauscher (19) und ein zweiter Umgehungskreislauf (14) in der Kathodenzufuhrleitung (4) eingesetzt werden.

5. Brennstoffzellensystem nach Anspruch 1,
**dadurch gekennzeichnet, dass** zusätzlich ein Wärmetauscher (7) und ein Umgehungskreislauf (14) in der Anodenabgasleitung (3) eingesetzt werden.

6. Brennstoffzellensystem nach Anspruch 1,
**dadurch gekennzeichnet, dass** ein Ventil (9, 18) im Umgehungskreislauf (14, 16) eingesetzt wird.

7. Brennstoffzellensystem nach Anspruch 6,
**dadurch gekennzeichnet, dass** das Ventil (9, 18) ein passives Thermostatventil ist.

8. Brennstoffzellensystem nach Anspruch 6,
**dadurch gekennzeichnet, dass** das Ventil (9, 18) ein steuerungsaktiviertes Ventil ist, das von einer Steuereinheit des Brennstoffzellensystem geregelt wird.

9. Ein Verfahren zum Betrieb eines Brennstoffzellensystems, wobei der Brennstoff zu einer Anode (1.1) einer Brennstoffzelle (1) und ein Oxidans zu einer Kathode (1.2) der Brennstoffzelle (1) geleitet wird, wobei das Oxidans in einem oxidansverarbeitenden Teil (1.2, 4, 5) des Brennstoffzellensystems geleitet und verarbeitet wird,
**dadurch gekennzeichnet, dass** während des normalen Betriebs des Brennstoffzellensystems das Oxidans und/oder ein Brennstoffzellenabgas von einem Kühlmittel eines Brennstoffzellen-Kreislaufs (10) gekühlt wird und dass während des Anlaufens des Brennstoffzellensystems der Fluss des Kühlmittels in einen Umgehungskreislauf (14, 16) umgelenkt wird, so dass verhindert wird, dass das Oxidans und/oder das Brennstoffzellenabgas gekühlt wird.

10. Verfahren nach Anspruch 9,
**dadurch gekennzeichnet, dass** das Umlenken des Kühlmittelflusses abhängig von den Betriebsbedingungen des Brennstoffzellensystems erfolgt.

11. Verfahren nach Anspruch 9,
**dadurch gekennzeichnet, dass** das Umlenken des Kühlmittelflusses durch ein passives Thermostatventil (9, 18) erfolgt, das auf die Temperatur des Kühlmittels anspricht.

12. Verfahren nach Anspruch 9,
**dadurch gekennzeichnet, dass** das Umlenken des Kühlmittelflusses durch ein steuerungsaktiviertes Ventil (9, 18) erfolgt, das auf ein Steuersignal einer Steuereinheit im Brennstoffzellensystem anspricht.

## Revendications

1. Système de pile à combustible comprenant une pile à combustible (1) doté d'une partie de traitement de combustible (1.1, 2, 3) comprenant une anode (1.1) ayant une conduite (2) d'alimentation en combustible destinée à alimenter en combustible l'anode (1.1) et une conduite (3) d'échappement d'anode destinée à éliminer l'échappement d'anode provenant de l'anode (1.1) et une partie de traitement de comburant (1.2, 4,5) ladite partie de comburant (1.2, 4, 5) comprenant une cathode (1.2) ayant une conduite (4) d'alimentation en oxygène destinée à alimenter en oxygène la cathode (1.2) et une ligne (5) d'échappement de cathode destinée à éliminer l'échappement de cathode provenant de la cathode (1.2), une unité (9) réceptrice d'eau destinée à extraire l'eau provenant de l'échappement de cathode **caractérisé en ce que**
- au moins un échangeur de chaleur (7, 19) est disposé dans la partie de traitement de comburant (1.2, 4, 5),
- une partie dudit échangeur de chaleur (7, 19) est en contact thermique avec un réfrigérant d'un circuit (10) de refroidissement de pile à combustible de ladite pile à combustible (1) et une autre partie dudit échangeur de chaleur (7, 19) est en contact thermique avec le comburant ou un échappement de pile à combustible destinée à refroidir le comburant et/ou l'échappement de pile à combustible,
- ce qui permet en dessous du point de gel d'une eau de produit générée dans ladite pile à combustible (1) à un circuit de dérivation (14, 16) d'être utilisé pour couper un écoulement de réfrigérant en direction dudit échangeur (7, 19) de chaleur.

2. Système de pile à combustible selon la revendication 1, **caractérisé en ce que** ledit échangeur de chaleur (7) et ledit circuit de dérivation (14) sont utilisés dans la conduite (5) d'échappement de cathode.

3. Système de pile à combustible selon la revendication 1, **caractérisé en ce que** ledit échangeur de chaleur (19) et ledit circuit de dérivation (14) sont utilisés dans la conduite (4) d'alimentation de cathode.

4. Système de pile à combustible selon la revendication 1, **caractérisé en ce que** ledit échangeur de chaleur (7) et ledit circuit de dérivation (14) sont utilisés dans la conduite (5) d'échappement de cathode et un second échangeur de chaleur (19) et un second circuit de dérivation (14) sont utilisés dans la conduite (4) d'alimentation de cathode.

5. Système de pile à combustible selon la revendication 1, **caractérisé en ce que** ledit échangeur de chaleur (7) et ledit circuit de dérivation (14) sont en outre utilisés dans la conduite (3) d'échappement d'anode.

6. Système de pile à combustible selon la revendication 1, **caractérisé en ce qu'**une soupape (9,18) est utilisée dans ledit circuit de dérivation (14, 16).

7. Système de pile à combustible selon la revendication 6, **caractérisé en ce que** ladite soupape (9, 18) est une soupape thermostatique passive.

8. Système de pile à combustible selon la revendication 6, **caractérisé en ce que** ladite soupape (9, 18) est une soupape commandée en réponse à une unité de commande dudit système de pile à combustible.

9. Procédé de fonctionnement d'un système de pile à combustible, un combustible étant alimenté à une anode (1.1) d'une pile à combustible et un comburant étant alimenté à une cathode (1.2) de ladite pile à combustible (1), le comburant étant acheminé et traité dans une partie de traitement de comburant (1.2, 4, 5) dudit système de pile à combustible, **caractérisé en ce que** en fonctionnement normal dudit système de pile à combustible ledit comburant et/ou un échappement de pile à combustible étant refroidi(s) par un réfrigérant d'un circuit (10) de pile à combustible et **en ce que** pendant le démarrage du système de pile à combustible l'écoulement du réfrigérant est commuté vers un circuit (14, 16) de dérivation empêchant ainsi le refroidissement du comburant et/ou de l'échappement de pile à combustible.

10. Procédé selon la revendication 9, **caractérisé en ce que** la commutation de l'écoulement de réfrigérant est réalisé en fonction des conditions de fonctionnement du système de pile à combustible.

11. Procédé selon la revendication 9, **caractérisé en ce que** la commutation de l'écoulement de réfrigérant est réalisé par une soupape thermostatique passive (9, 18) en réponse à la température du réfrigérant.

12. Procédé selon la revendication 9, **caractérisé en ce que** la commutation de l'écoulement de réfrigérant est réalisé par une soupape commandée (9, 18) en réponse à un signal de commande d'une unité de commande utilisée dans ledit système de pile à combustible.
